# EUROPÄISCHE PATENTSCHRIFT

(11) **EP 3 235 036 B1**
(45) Veröffentlichungstag und Bekanntmachung des Hinweises auf die Patenterteilung: **24.10.2018**
(21) Anmeldenummer: 15816425.1
(22) Anmeldetag: 15.12.2015
(51) Int. Cl.: H01M 8/04089, H01M 8/04082, F02D 9/10, F16K 1/226

(54) **VENTILVORRICHTUNG IN EINEM KRAFTFAHRZEUG**
VALVE DEVICE IN A MOTOR VEHICLE
DISPOSITIF DE SOUPAPE DANS UN VÉHICULE AUTOMOBILE

(30) Priorität: 19.12.2014 DE 102014226733
(43) Veröffentlichungstag der Anmeldung: 25.10.2017
(73) Patentinhaber: Continental Automotive GmbH, 30165 Hannover (DE)
(72) Erfinder: KOHLEN, Peter, 61267 Neu Anspach (DE); MONTIGNY, Rainer Johannes, 65812 Bad Soden (DE); KOPP, Stefan, 63486 Bruchköbel (DE)
(86) Internationale Anmeldenummer: PCT/EP2015/079820
(87) Internationale Veröffentlichungsnummer: WO 2016/096874

(56) Entgegenhaltungen:
- EP-A2- 0 223 046
- DE-A1-102005 027 684
- DE-A1-102008 018 494
- US-A- 5 081 972

## Beschreibung

Gegenstand der Erfindung ist eine Ventilvorrichtung für eine Brennstoffzellenanordnung in einem Kraftfahrzeug mit einem in einem Gehäuse verlaufenden Strömungskanal, einer den Strömungsquerschnitt beeinflussenden Klappe und einem die Klappe antreibenden Antrieb, wobei die Klappe an einer Welle befestigt und die Welle drehbar in dem Gehäuse gelagert ist, einem im Strömungskanal angeordneten Ventilsitz und einer an einem radial umlaufenden Rand der Klappe angeordneten Dichtung, die in Schließstellung der Klappe mit dem Ventilsitz in Kontakt steht, so dass die Welle die Klappe in einem Winkel durchdringt.

Derartige Ventilvorrichtungen finden beispielsweise als Drosselklappenstutzen Verwendung und sind aus der DE 102005027684 A1, EP 0223046 A2 und US 5081972 A bekannt. Durch die drehbar gelagerte Klappe ist es möglich, den Strömungskanal vollständig zu verschließen oder derart zu öffnen, um so den Massendurchsatz zu regeln. Dabei kann es bei ungünstigen Umwelteinflüssen im Strömungskanal und an der Klappe zur Eisbildung kommen. Insbesondere bei einem abgestellten Fahrzeug, wenn die Klappe in der Notlaufstellung steht, in der sie lediglich einen kleinen Spalt des Strömungskanals freigibt, begünstigt diese Stellung der Klappe die Eisbildung. Infolge der Eisbildung wird ein gleichmäßiger Bewegungsablauf der Klappe gestört. Im schlimmsten Fall verhindert die Eisbildung ein dichtes Verschließen des Strömungskanals durch die Klappe. Insbesondere bei Ventilvorrichtungen für Brennstoffzellenanwendungen, bei denen ebenfalls ein Luftstrom geregelt werden muss, wirkt sich dieser Umstand besonders gravierend aus, da die Anforderungen hinsichtlich der Dichtheit 10- bis 20-mal höher als bei herkömmlichen Drosselklappenstutzen sind. Das hat zur Folge, dass solche Ventilvorrichtungen aufwändig gebaut und damit relativ kostenintensiv sind. Um die Eisbildung zu vermeiden, ist es bekannt, die Dichtung aus PTFE (Polytetraflourethylen) zu gestalten. Damit soll eine Eisbildung im Bereich der Dichtung vermieden werden. Durch die wasserabweisende Wirkung einer solchen Dichtung lassen sich Dichtigkeitsprobleme aufgrund von Eisbildung vermeiden. Allerdings ist PTFE kein elastischer Werkstoff, so dass seine Dichtwirkung schlechter ist als bei einem gleichgestalteten Elastomer. Insbesondere die Relaxionsgeschwindigkeit ist bei derartigen Dichtungen verbesserungswürdig und die Regelgüte des Massendurchsatzes ist aufgrund des Kriechverhaltens eines PTFE-Werkstoffes nicht optimal.

Aufgabe der Erfindung ist es daher, eine Ventilvorrichtung der eingangs genannten Art zu schaffen, welche eine zuverlässige Abdichtung des Strömungskanals mit nur geringer Leckage ermöglicht und gleichzeitig eine Eisbildung bei ungünstigen Witterungsbedingungen verhindert. Die hierfür erforderliche Dichtung soll darüber hinaus einfach und kostengünstig sein.

Gelöst wird die Aufgabe durch eine Ventilvorrichtung nach Anspruch 1.

Mit der Anordnung eines Federelements wird die Dichtfunktion der Dichtung und die Regelgüte des Massendurchsatzes unterstützt und verbessert, indem die Elastizität und Relaxionsgeschwindigkeit der Dichtung erhöht wird.

Da die Dichtung über den Umfang unterschiedlich beaufschlagt wird, wäre es ausreichend das Federelement nur an den dafür erforderlichen Stellen anzuordnen. Die dadurch bedingte lagegenaue Anordnung des Federelements zur Klappe erfordert jedoch einen erhöhten Aufwand während der Montage und stellt eine Fehlerquelle dar. Dies lässt sich dadurch vermeiden, dass das Federelement radial umlaufend ausgebildet ist, so dass die lagegenaue Orientierung zur Klappe entfällt.

Die Montage lässt sich weiter vereinfachen, wenn das Federelement an der Dichtung befestigt ist. Federelement und Dichtung lasen sich dadurch vorab montieren und als ein Bauteil an der Klappe anordnen.

Das Federelement ist in einer anderen Ausgestaltung von Umwelteinflüssen abgeschirmt, wenn es in die Dichtung integriert ist. Eine derartige Integration kann beispielsweise das Umspritzen des Federelements mit dem Dichtungsmaterial sein.

Das Federelement lässt sich besonders einfach herstellen, da es einen ringförmigen Grundkörper besitzt, von dem nach radial außen Federzungen abstehen.

Die Dichtung muss aufgrund der Anordnung der Klappe in dem Strömungskanal über den Umfang verteilt unterschiedlich arbeiten, so dass bei nur einer Federzunge diese unterschiedlich belastet würde. Dies wird gemäß der Erfindung nach Anspruch 1 vermieden, indem mehrere Federzungen am Federelement vorgesehen sind. Je nach Größe der Klappe und damit der Dichtung und Anwendung lässt sich die Federwirkung besser einsetzen, wenn das Federelement zwischen 10 und 30 Federzungen aufweist.

Im einfachsten Fall sind alle Federzungen gleich ausgebildet, so dass jede Federzunge dieselbe Federkonstante besitzt.

Für besondere Anforderungen kann es erforderlich sein, die Federwirkung der Dichtung speziell an die Lageausrichtung anzupassen. Für diesen Fall ist es vorteilhaft, die Federzungen mit unterschiedlichen Federkonstanten auszubilden. Unterschiedliche Federkonstanten lassen sich durch unterschiedliche Längen, Breiten und/oder Abstände zueinander erzeugen.

Ein robustes Federelement mit vorteilhafterweise mit einer Ausgestaltung aus Metall erreicht.

Eine Befestigung von Dichtung und Federelement lässt gemäß einer vorteilhaften Ausgestaltung einfach dadurch erreichen, wenn Dichtung und Federelement teilweise von dem Klappenmaterial, vorzugsweise mittels Spritzgießen, umgeben sind.

Die zu umspritzenden Bereiche lassen sich reduzieren, wenn das Federelement zumindest einen Abschnitt aufweist, der einen Hinterschnitt bildet und der mit dem Klappenmaterial ausgefüllt ist. Auf diese Weise kann Klappenmaterial eingespart werden ohne das Halten des Federelements zu beeinflussen, da der sichere Halt über den mindestens einen Hinterschnitt gewährleistet wird.

An einem Ausführungsbeispiel wird die Erfindung näher erläutert. Es zeigen in
- Fig. 1: eine erfindungsgemäße Ventilvorrichtung,
- Fig. 2: die Klappe aus Fig. 1 und
- Fig. 3, 4: vergrößerte Darstellungen der Klappe.

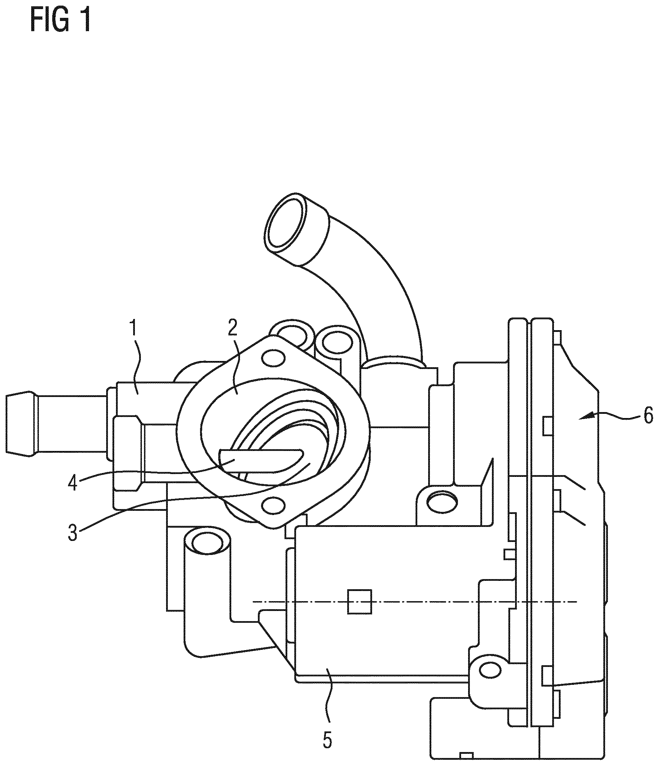

Figur 1 zeigt einen Drosselklappenstutzen mit einem Gehäuse 1, einem in dem Gehäuse 1 befindlichen Strömungskanal 2, in dem eine scheibenförmige Klappe 3 angeordnet ist. Die Klappe 3 ist fest mit einer Welle 4 verbunden und die Welle 4 ist in dem Gehäuse 1 drehbar gelagert. Die Welle 4 wird von einem im Gehäuse 1 angeordneten Elektromotor 5 angetrieben, wobei zwischen Welle 4 und Elektromotor 5 ein Getriebe 6 zwischengeschaltet ist.

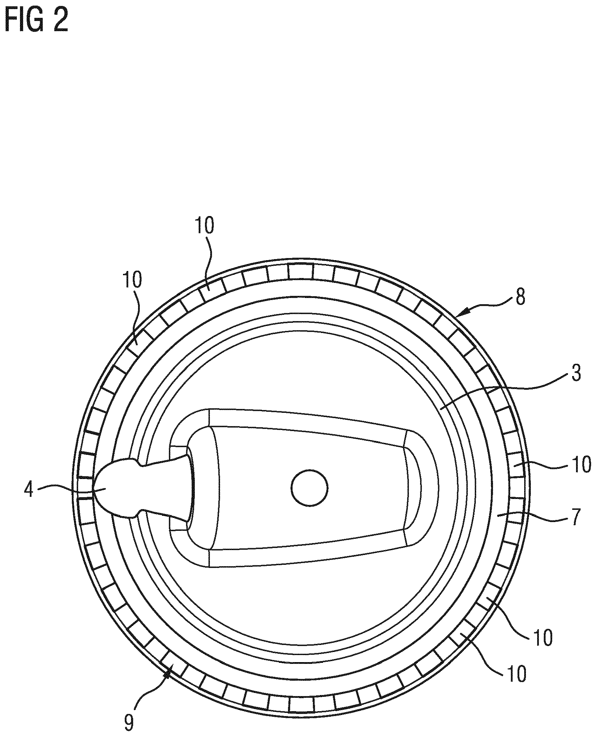

Figur 2 zeigt die Klappe 3 mit einem Teil der Welle 4. Am radial äußeren Rand 7 der Klappe 3 ist eine Dichtung 8 angeordnet. Die Dichtung 8 verläuft am Umfang des Randes 7 und sorgt so für die Abdichtung des Strömungskanals 2, wenn sich die Klappe 3 in Schließstellung befindet. In der gezeigten Darstellung ist auf der Dichtung 8 ein Federelement 9 angeordnet, welches mehrere gleich ausgebildete Federzungen 10 aufweist, die nach radial außen gerichtet auf der Dichtung 8 aufliegen und so die Federwirkung der Dichtung unterstützen. Die Federzungen 10 sind gleichmäßig am Umfang verteilt angeordnet.

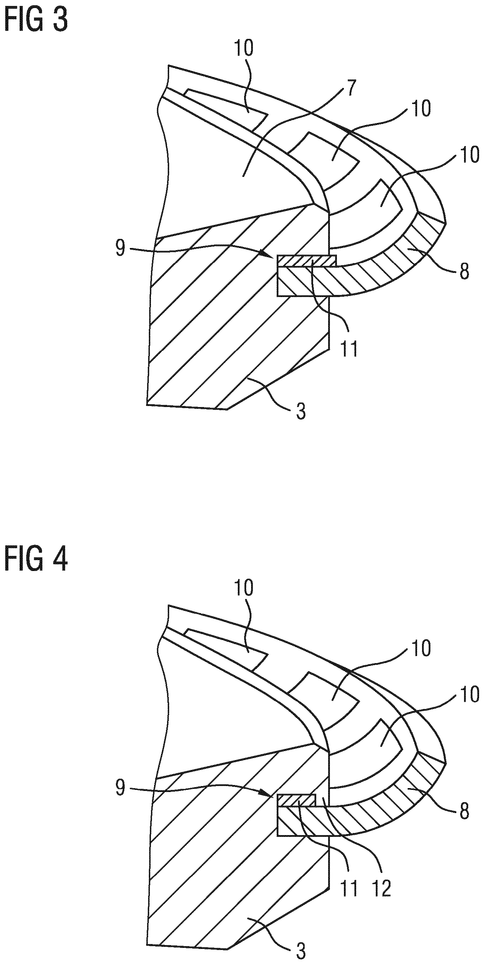

In Figur 3 zeigt als Ausschnitt der Klappe 3 den radial äußeren Rand 7 mit der Dichtung 8 aus PTFE und dem Federelement 9. Das Federelement 9 besitzt einen ringförmigen Grundkörper 11, von dem aus sich nach radial außen die Federzungen 10 erstrecken. Der Grundkörper 11 und der radial innen liegenden Teil der Dichtung 8 sind mit dem Klappenmaterial umspritzt, so dass beide Elemente fest mit der Klappe 3 verbunden sind.

Figur 4 zeigt ein gegenüber Figur 3 geringfügig anderes Federelement 9. Der Grundkörper 11 besitzt über den Umfang verteilt an einigen Stellen zwischen jeweils zwei Federzungen 10 eine geringere radiale Erstreckung, so dass beim Umspritzen das Klappenmaterial bis auf die Dichtung 8 gelangt. Durch den so erzeugten Hinterschnitt 12 ist das Federelement 9 unverlierbar mit der Klappe 3 verbunden.

## Patentansprüche

1. Ventilvorrichtung für eine Brennstoffzellenanordnung in einem Kraftfahrzeug mit einem in einem Gehäuse verlaufenden Strömungskanal, einer den Strömungsquerschnitt beeinflussenden Klappe und einem die Klappe antreibenden Antrieb, wobei die Klappe an einer Welle befestigt und die Welle drehbar in dem Gehäuse gelagert ist, einem im Strömungskanal angeordneten Ventilsitz und einer an einem radial umlaufenden Rand der Klappe angeordneten Dichtung aus PTFE, die in Schließstellung der Klappe mit dem Ventilsitz in Kontakt steht und die Welle die Klappe in einem Winkel durchdringt, **dadurch gekennzeichnet, dass** die Dichtung (8) ein Federelement (9) enthält und das Federelement (9) einen ringförmigen Grundkörper (11) besitzt von dem nach radial außen Federzungen (10) abstehen.

2. Ventilvorrichtung nach Anspruch 1, **dadurch gekennzeichnet, dass** das Federelement (9) an der Dichtung (8) befestigt ist.

3. Ventilvorrichtung nach Anspruch 1, **dadurch gekennzeichnet, dass** das Federelement (9) in die Dichtung (8) integriert ist.

4. Ventilvorrichtung nach zumindest einem der vorhergehenden Ansprüche 1 bis 3, **dadurch gekennzeichnet, dass** das Federelement (9) zwischen 10 und 30 Federzungen (10) aufweist.

5. Ventilvorrichtung nach zumindest einem der vorhergehenden Ansprüche 1 bis 3, **dadurch gekennzeichnet, dass** das Federelement (9) aus Metall besteht.

6. Ventilvorrichtung nach zumindest einem der vorhergehenden Ansprüche, **dadurch gekennzeichnet, dass** die Dichtung (8) und das Federelement (9) teilweise von dem Klappenmaterial (3), vorzugsweise mittels Spritzgießen, umgeben sind.

7. Ventilvorrichtung nach zumindest einem der vorhergehenden Ansprüche, **dadurch gekennzeichnet, dass** das Federelement (9) zumindest einen Abschnitt aufweist, der einen Hinterschnitt (12) bildet und der mit dem Klappenmaterial (3) ausgefüllt ist.

## Claims

1. Valve device for a fuel cell arrangement in a motor vehicle with a flow channel extending in a housing, a flap that influences the flow cross-section and a drive that drives the flap, wherein the flap is attached to a shaft and the shaft is rotatably supported in the housing, a valve seat disposed in the flow channel and a seal made of PTFE disposed on a radially peripheral edge of the flap, which contacts the valve seat with the flap in the closed position, and the shaft passes through the flap at an angle, **characterized in that** the seal (8) contains a spring element (9) and the spring element (9) comprises an annular base body (11) from which spring tongues (10) protrude radially outwards.

2. Valve device according to Claim 1, **characterized in that** spring element (9) is attached to the seal (8).

3. Valve device according to Claim 1, **characterized in that** the spring element (9) is integrated within the seal (8).

4. Valve device according to at least one of the preceding Claims 1 to 3, **characterized in that** the spring element (9) comprises between 10 and 30 spring tongues (10).

5. Valve device according to at least one of the preceding Claims 1 to 3, **characterized in that** the spring element (9) consists of metal.

6. Valve device according to at least one of the preceding claims, **characterized in that** the seal (8) and the spring element (9) are partly encapsulated by the flap material (3), preferably by means of injection molding.

7. Valve device according to at least one of the preceding claims, **characterized in that** the spring element (9) comprises at least one section that forms an undercut (12) and that is filled with the flap material (3).

## Revendications

1. Dispositif de soupape pour un agencement de pile à combustible dans un véhicule automobile, comprenant un conduit d'écoulement s'étendant dans un boîtier, un clapet influençant la section transversale d'écoulement et un entraînement entraînant le clapet, le clapet étant fixé sur un arbre et l'arbre étant supporté de manière rotative dans le boîtier, un siège de soupape disposé dans le canal d'écoulement et un joint d'étanchéité en PTFE disposé sur un bord radialement périphérique du clapet, qui est en contact avec le siège de soupape dans la position de fermeture du clapet, et l'arbre traversant le clapet suivant un certain angle, **caractérisé en ce que** le joint d'étanchéité (8) contient un élément de ressort (9) et l'élément de ressort (9) possède un corps de base annulaire (11) depuis lequel font saillie radialement vers l'extérieur des langues de ressort (10).

2. Dispositif de soupape selon la revendication 1, **caractérisé en ce que** l'élément de ressort (9) est fixé au joint d'étanchéité (8).

3. Dispositif de soupape selon la revendication 1, **caractérisé en ce que** l'élément de ressort (9) est intégré dans le joint d'étanchéité (8).

4. Dispositif de soupape selon au moins l'une quelconque des revendications précédentes 1 à 3, **caractérisé en ce que** l'élément de ressort (9) présente entre 10 et 30 langues de ressort (10).

5. Dispositif de soupape selon au moins l'une quelconque des revendications précédentes 1 à 3, **caractérisé en ce que** l'élément de ressort (9) se compose de métal.

6. Dispositif de soupape selon au moins l'une quelconque des revendications précédentes, **caractérisé en ce que** le joint d'étanchéité (8) et l'élément de ressort (9) sont entourés en partie par le matériau du clapet (3) de préférence par moulage par injection.

7. Dispositif de soupape selon au moins l'une quelconque des revendications précédentes, **caractérisé en ce que** l'élément de ressort (9) présente au moins une portion qui forme une contre-dépouille (12) et qui est remplie avec le matériau du clapet (3).
